Europäisches Patentamt

European Patent Office

Office européen des brevets

(19)

(11) Publication number: **0 130 810**
**B1**

(12) **EUROPEAN PATENT SPECIFICATION**

(45) Date of publication of patent specification: **01.06.88**

(51) Int. Cl.⁴: **B 07 C 1/02, B 65 G 47/68**

(21) Application number: **84304441.3**

(22) Date of filing: **29.06.84**

(54) Conveyor sorting system.

(30) Priority: **01.07.83 GB 8317975**

(43) Date of publication of application:
**09.01.85 Bulletin 85/02**

(45) Publication of the grant of the patent:
**01.06.88 Bulletin 88/22**

(84) Designated Contracting States:
**DE FR IT NL**

(56) References cited:
**DE-A-1 556 562**
**DE-A-2 431 327**
**US-A-3 252 595**
**US-A-3 515 254**
**US-A-3 523 618**
**US-A-3 626 956**

**SIEMENS-ZEITSCHRIFT, vol. 48, no. 9,
September 1974, pages 734-736, Erlangen, DE;
W. DESCHNER et al.: "Prozessrechnereinsatz
bei Paketverteilanlagen"
Idem**

(73) Proprietor: **THE POST OFFICE**
**Post Office Headquarters 33 Grosvenor Place
London SW1X 1PX (GB)**

(72) Inventor: **Jones, Stephen Kenneth
33, The Rowans
Billericay Essex OM11 2PB (GB)**
Inventor: **Bright, David Edward
Spinneys Rushetts Road West Kingsdown
Sevenoaks Kent TN15 6EY (GB)**

(74) Representative: **Newstead, Michael John et al
Haseltine Lake & Co. 28 Southampton Buildings
Chancery Lane
London, WC2A 1AT (GB)**

## Description

This invention relates to a conveyor sorting system for feeding articles to a main conveyor of the system.

Known such systems for use in sorting post parcels have a plurality of discharge positions located along the length of a conveyor at which the parcels carried by the conveyor may be discharged. Each parcel is discharged at a discharge position according to the destination of the particular parcel and under the control of a controller into which a code indicative of that destination is fed.

In one particular form, the conveyor is made up of an effective endless belt of transverse slats with each parcel occupying as many slats as the length of the parcel requires and means are provided at the discharge positions for tilting the slats to discharge the parcels at their intended positions. Code setting means are provided to enable one or more operators at a loading position to feed into the conveyor controller a destination code for each parcel and the control unit is operative to actuate the slat tilting mechanism associated with the required discharge position when the slats occupied by the particular parcel reach the intended destination.

Siemens Zeitschrift, Volume 48, No. 9, September 1974, pages 734—736, Erlangen, DE; W. Deschner et al. "Prozessrechnereinsatz bei Paket-verteilanlagen" discloses a conveyor sorting system comprising: a main conveyor; a plurality of feed conveyors, each having a loading station at which an article can be loaded on to the respective feed conveyor to be fed thereby to the main conveyor; control means, for controlling the feed conveyors and for receiving data fed to it relating to articles loaded on to the feed conveyors; respective first detecting means at each feed conveyor, for detecting articles on the feed conveyors and supplying data to the control means in response to such detection, the control means controlling the feed conveyors in response to said data such that articles on the feed conveyors are fed to the main conveyor with a predetermined minimum spacing between successive articles; and second detecting means at the main conveyor, for detecting articles on the main conveyor and supplying information to the control means in response to such detection, the control means checking, in response to such information, whether each article has arrived at the further detecting means at the expected time, and being adapted to generate an electric signal, the nature of the signal depending on whether each article has arrived at the further detecting means at the expected time.

DE—A—2 431 327 discloses a conveyor system in which a control means is adapted to check, in response to information supplied from a detecting means, whether or not a predetermined minimum spacing has been maintained between articles on the conveyor. The control means generates an electric signal, the nature of the signal depending on whether or not said given minimum spacing has been maintained.

US—A—3 515 254 discloses a conveyor system having a single conveyor, in which a signal from the detecting means is used to determine the length of articles on the conveyor, in order to be able to locate the centres of said articles.

In order to make full use of the capacity of the conveyor, the parcels should be fed to the conveyor in a regular continuous manner notwithstanding that there may be more than one loading position connected to the conveyor by a feeding device. Furthermore, time, speed and space restrictions will normally require that the loading positions be positioned close together.

The present invention is concerned with a feeding system which is designed to provide a regular flow of articles to a conveyor and at the same time to enable a degree of compactness of the feeding system to be achieved.

According to the present invention, there is provided a conveyor sorting system comprising:

a main conveyor;

a plurality of feed conveyors, each feed conveyor having a loading station at which an article can be loaded on to the respective feed conveyor to be fed thereby to the main conveyor;

control means, for controlling the feed conveyors and for receiving data fed to it relating to articles loaded on to the feed conveyors;

respective first detecting means at each feed conveyor, for detecting articles on the feed conveyors and supplying data to the control means in response to such detection, the control means controlling the feed conveyors in response to said data such that articles on the feed conveyors are fed to the main conveyor with a predetermined minimum spacing between successive articles; and

second detecting means at the main conveyor for detecting articles on the main conveyor and supplying information to the control means in response to such detection, the control means checking, in response to such information, whether each article has arrived at the second detecting means at the expected time, and being adapted to generate an electric signal, the nature of the signal depending on whether each article has arrived at the second detecting means within a predetermined margin of its expected time,

characterised in that the control means is adapted to store data relating to the lengths of individual articles in response to information supplied from the respective first detecting means, to compare such data with the detected length of each article as detected by the second detecting means, and to generate an electric signal, the nature of the signal depending on whether the detected length of each article as detected by the second detecting means is within a predetermined margin of its length as detected by the first detecting means at its respective feed conveyor.

The present invention will now be described, by

**0 130 810**

way of example, with reference to the accompanying drawings, in which:

Figure 1 is a plan view of a system according to an embodiment of the invention;

Figure 2 is an end view taken on the line A—A of Figure 1;

Figure 3 is a view on arrow E of Figure 1;

Figure 4 shows a detail of Figure 1 to an enlarged scale;

Figure 5 is a section taken on the line C—C of Figure 4;

Figure 6 is a section on the line DD of Figure 1;

Figure 7 is a flow chart showing the operation of a controller of the system with four input lanes in operation; and

Figure 8 is a flow chart showing the operation of the controller in a merging area of the system.

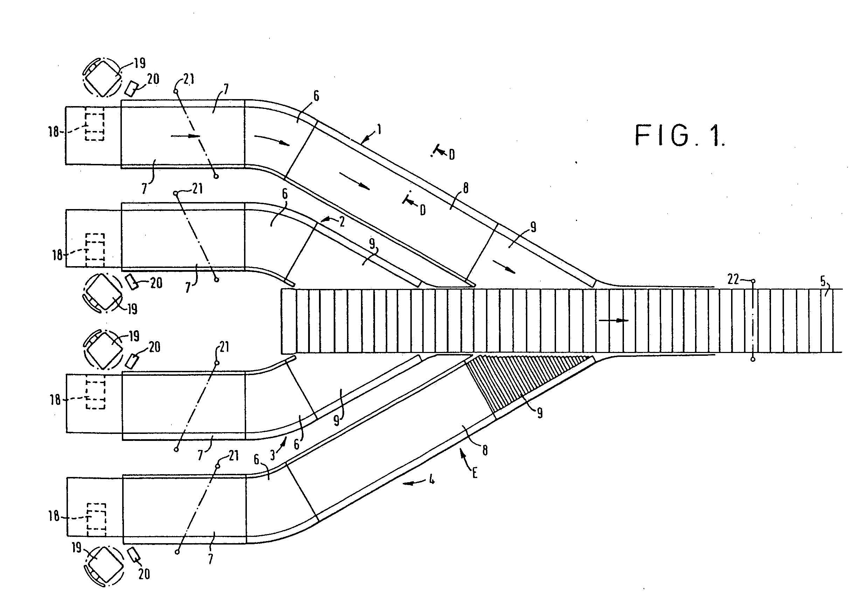

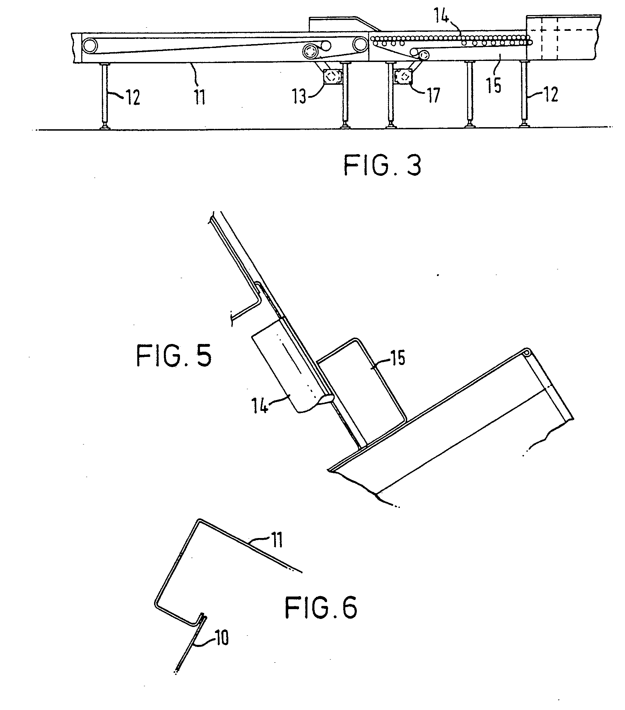

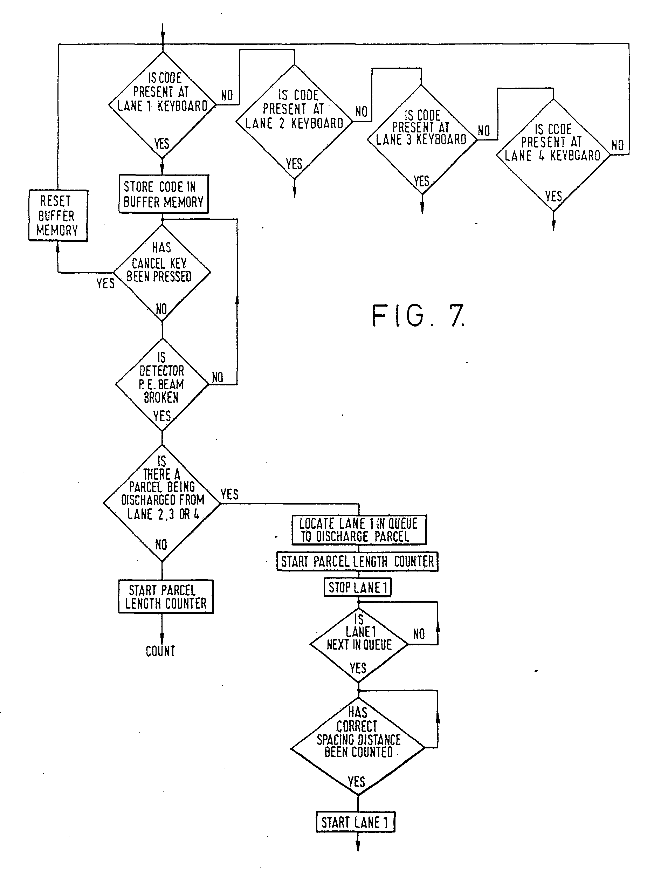

Referring now to Figure 1, a feeding system for a parcel sorting machine comprises four feed conveyors 1—4 the paths of which merge with that of a main conveyor 5 of the parcel sorting machine. Each feed conveyor incorporates a curved section 6 and a linear section 7 which is upstream of the curved section and on which parcels to be sorted are loaded. In the case of the conveyors 1 and 4, the curved section is followed by a further linear section 8 and finally a substantially triangular section 9. In the case of the conveyors 2 and 3 a substantially triangular section 9 immediately follows the curved section 6. Each of the conveyor sections 6 to 8 consists of an endless belt 10 (see also Figure 6) passing around end rollers mounted in a housing 11 supported on legs 12 (see Figure 3). Each of these sections is driven, a drive for the section 8 of the conveyor 4 being indicated in Figure 3 at 13. The sections 9 consist of conveyor rollers 14 (see also Figures 4 and 5) mounted in a housing 15 which is also supported on legs 12 and each terminates at the downstream end in an apron 16 which overlaps the conveyor 5. The rollers 14 are driven as indicated at 17 in Figure 3. Alternatively each section 9 may consist of a triangular belt passing around end rollers.

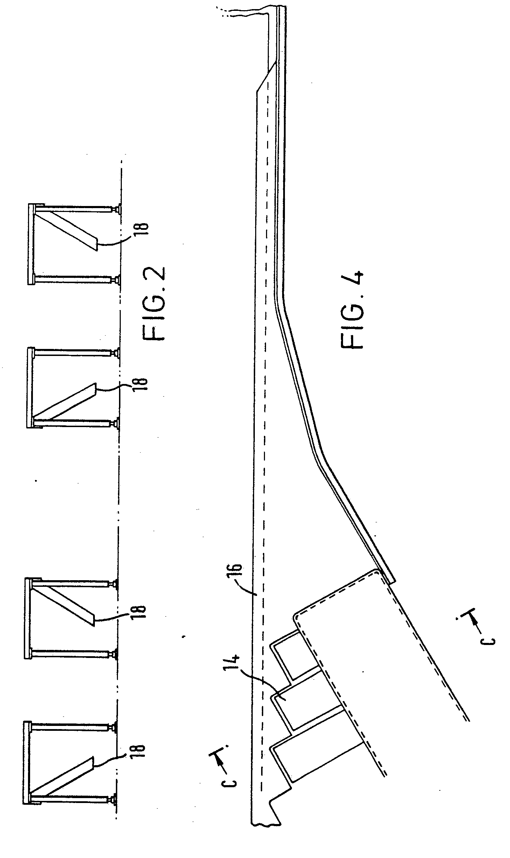

In front of each loading section 7 is a chute 18 (see also Figure 2) by means of which small items may be separated. Adjacent each section 7 is an operator's seat 19 and a coding device 20 by means of which a code indicative of the destination of each parcel loaded may be registered in a store, using an input device such as a keyboard, forming part of a system for registering the codes of the parcels whilst on the feeding system. Each section 7 is also provided with a light source and photoelectric detector unit 21 which forms in conjunction with the detectors of the other loading sections and a controller controlling the drives of the feed conveyors, a queueing and spacing system as will be described and which initiates entry of the previously stored parcel codes in a transfer memory forming part of the above-mentioned registering system. In more detail, the detectors 21 of the respective conveyors are each connected to the controller such that a parcel entering the detection zone of a particular detector may only continue past the detector at normal speed if firstly none of the other detectors is detecting the presence of a parcel and secondly the trailing edge of the last parcel to be released has travelled a sufficient distance for the ultimate parcel spacing on the parcel sorting machine to be correct. If these two conditions are not met, then the conveyor section 7 carrying the first-mentioned parcel is halted and only re-started when the previously released parcel has travelled the sufficient distance mentioned. Furthermore, as each parcel passes past the particular detector 21, the controller applies the code registered for that parcel to the aforementioned transfer memory, the signal from the detector being monitored to determine the length of the parcel which is also located in the transfer memory. A minimum spacing between the parcels is achieved by adding to the length code an additional code which represents the gap required between consecutive parcels. This is adjustable. The codes in the transfer memory are advanced in synchronism with the speed of the conveyors 1—4.

As will be seen from Figure 1, the beam of each detector 21 is directed across the conveyor path of the particular section 7 at an angle, the purpose of which is to ensure that a parcel leaving the particular detector will reach a zone extending across the main conveyor immediately downstream of the merging area formed by the feed conveyors and the main conveyor and normal to the direction of travel of the main conveyor, in substantially the same time irrespective of the lateral position of the parcel on the feed conveyor.

A further light source and photoelectric detector unit 22 is provided on the main conveyor immediately downstream of the merging area to check that each parcel is still on station (that is that the position of the code of that parcel in the memory corresponds to the physical position of the parcel on the conveyor) as will be described and if correct to apply the code to the controller of the parcel sorting machine.

In operation of the feeding system, the conveyor sections 6, 8 and 9 run continuously and at a speed such that the component of the speed of the sections 9 in the travelling direction of the conveyor 5 equals the speed of the conveyor 5. The loading sections 7 normally run at the speed of the sections 6 but are intermittently halted under the control of the detectors 21, as previously mentioned. Parcels are supplied from a source (not shown) to each operator who takes each parcel, reads the address and enters in the appropriate destination code on his coding device 20 which registers this code in the previously mentioned store. Thereafter, the operator places the parcel on the loading section 7 of his feed conveyor which carries the parcel towards the associated detector 21. After passing past the detectors 21 to the parcels proceed along the respective conveyors 1—4 to join the conveyor 5 in sequence and with the correct spacing.

On entering the conveyor 5, each parcel travels past the detector 22. This is provided with means enabling the detector in effect to check that the parcels entering the conveyor 5 have not lost or gained station to an extent greater than a prescribed tolerance margin. Firstly, a check is made for approximate coincidence between the presence of the leading edge of a parcel in the detection zone of the detector and the appearance of a destination code at the output of the transfer memory. Secondly, a check is made between the length of the parcel as measured by the detector 22 and the length of the parcel as indicated by the length code appearing at the output of the transfer memory. Thirdly, a check is made between the spacing code at the output of the memory and the space between the parcel concerned and the next following parcel. Should any of these checks indicate the possibility of a parcel having lost or gained station to an extent greater than the prescribed tolerance margin, then no destination code is applied to the parcel sorting machine controller and the parcel will be conveyed to a miscellaneous parcel discharge position. Otherwise, the destination code together with precise information relating to the position of the parcel and its length is passed to the sorting machine controller in place of the information determined by the detectors 21.

It will be seen that the above described feeding system provides a compact and yet reliable system for feeding parcels in a sorting machine, and in particular the disposition of the light sources and photoelectric detector units 21 and the check employed before the parcel codes are assigned to the parcels themselves on the sorting machine serves to reduce the likelihood of missorts.

Thus, to summarise, the controller could be described as having three main functions, as follows:

a) to stop/start the conveyor sections 7 in each feed lane so that the parcels are transported on to main conveyor 5 one at a time with a predetermined, fixed clearance between each parcel;

b) to store the address/destination code and other data pertaining to each parcel; and

c) to check, after the parcels have merged on to the input of the conveyor 5, that each parcel is positioned such that its code can be reliably identified from those held in the store and that the item is physically sortable. If these conditions are met the data is forwarded to the main conveyor controller.

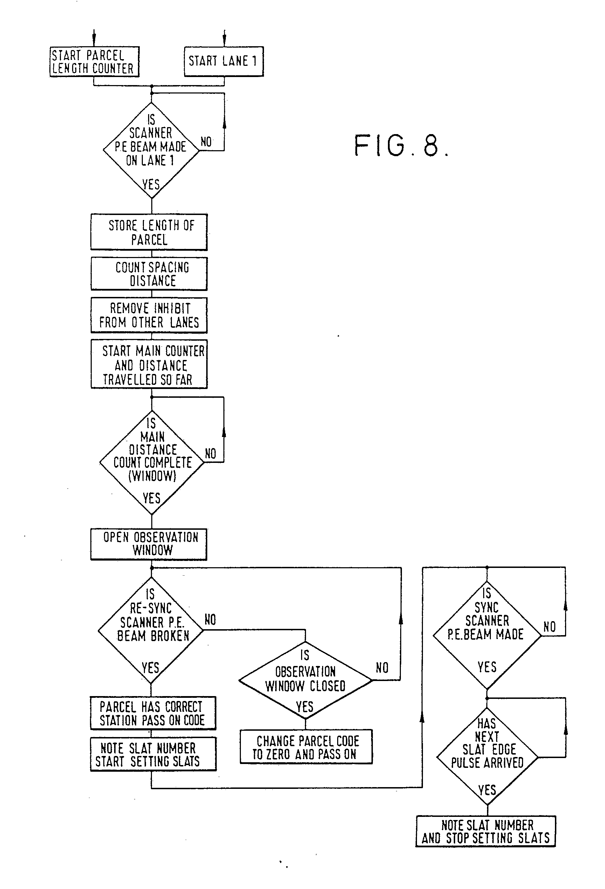

The above mentioned functions will now be described in greater detail with reference to Figures 7 and 8.

a. When a parcel is transferred by the operator on to a conveyor section 7, the parcel moves forward until it interrupts the light beam from photo-detector 21 across this section. The controller then decides whether the parcel can proceed or whether it has to stop because, if it were released, it would not be sufficiently separated from preceding parcels that may have been injected by other feed conveyor sections. Should a parcel be required to stop, the relevant conveyor section 7 is brought to a controlled halt until such time as the trailing edge of the preceding parcel has passed beyond the photo-detector 21 on its own lane by a distance equal to the preset clearance. An allowance is made for the distance by which the held parcel passes the photo-detector 21 during deceleration and acceleration. When more than one parcel is required to queue, they are released in the order in which they arrived at the respective photo-detector. The controller records distances and parcel lengths by means of pulse generators driven by the conveyor sections 7.

b. When an operator registers a code on the keyboard, the information is held, within the controller, in a keyboard buffer store. When the leading edge of a parcel interrupts the light beam 21 of the relevant conveyor section 7, this information is transferred to a main code store. Prior to this transfer occurring the operator may cancel and re-enter the code. The controller also records the length of each parcel as it passes through the light beam of the relevant conveyor section 7 and the position of the parcel leading edge, which is advanced as the parcel proceeds through the conveyor.

c. The time when each parcel should reach the detector 22 can be predicted from the leading edge information. To ensure that the correct code is associated with each parcel, codes are only forwarded, from the controller to the main conveyor controller, when the parcel interrupts the light beam across the main conveyor within a small, presettable distance of its theoretical position. This margin allows for the variations of parcel position that occur as the item is transported through the conveyor system. Should an item be removed, or significantly delayed or advanced or be present when it should not be, a reject code is applied to the item. The photo-detector 22 enables a second check to be made to ensure destination codes are not applied to the wrong parcel. The parcel length, measured initially on the relevant conveyor section 7, can be compared with that measured by the photo-detector 22, agreement to within a preset margin being necessary before the code data is forwarded to the main conveyor controller.

The photo-detector 22 is then used to check that the clearance between parcels has not been reduced sufficiently to prevent subsequent sorting. Should it have been so reduced, a reject code is again applied to the offending parcel(s).

Finally, because the position and orientation of most parcels will have altered slightly during transportation through the conveyor system, the positional and length data obtained from the photo-detectors 22 is used for the subsequent sorting process, replacing the data obtained from the photo-detectors 21.

Although this embodiment of the invention has been described with reference to a system wherein a plurality of conveyors feed a main conveyor as described above, it will be appreciated that the controller also be used when a plurality of conveyors feed a single parcel sorting machine, which would then act as the main conveyor of the system.

## Claims

1. A conveyor sorting system comprising:
a main conveyor (5);
a plurality of feed conveyors (1—4), each feed conveyor having a loading station at which an article can be loaded on to the respective feed conveyor to be fed thereby to the main conveyor (5);
control means, for controlling the feed conveyors and for receiving data fed to it relatng to articles loaded on to the feed conveyors;
respective first detecting means (21) at each feed conveyor (1—4), for detecting articles on the feed conveyors and supplying data to the control means in response to such detection, the control means controlling the feed conveyors (1—4) in response to said data such that articles on the feed conveyors are fed to the main conveyor (5) with a predetermined minimum spacing between successive articles; and
second detecting means (22) at the main conveyor (5), for detecting articles on the main conveyor and supplying information to the control means in response to such detection, the control means checking, in response to such information, whether each article has arrived at the second detecting means (22) at the expected time, and being adapted to generate an electric signal, the nature of the signal depending on whether each article has arrived at the second detecting means (22) within a predetermined margin of its expected time,
characterised in that the control means is adapted to store data relating to the lengths of individual articles in response to information supplied from the respective first detecting means (21), to compare such data with the detected length of each article as detected by the second detecting means (22), and to generate an electric signal, the nature of the signal depending on whether the detected length of each article as detected by the second detecting means (2) is within a predetermined margin of its length as detected by the first detecting means (21) at its respective feed conveyor.

2. A conveyor sorting system according to claim 1, further characterised in that the control means is adapted to check, in response to information supplied from the second detecting means (22), whether or not said given minimum spacing has been maintained.

3. A conveyor sorting system according to claim 2, further characterised in that the control means is adapted to generate an electric signal, the nature of the signal depending on whether or not said given minimum spacing has been maintained.

4. A conveyor sorting system according to claim 1, further characterised in that the control means is adapted to store data relating to the spacing between successive articles in response to information supplied from the first detecting means (21) at each of the respective feed conveyors, and to compare such data with the detected spacing between the articles as detected by the second detecting means (22).

5. A conveyor sorting system according to claim 4, further characterised in that the control means is adapted to generate an electric signal, the nature of the signal depending on whether the detected spacing between successive articles as detected by the second detecting means (22) is within a predetermined margin of the spacing as detected by the detecting means (21) at the respective feed conveyors.

6. A conveyor sorting system according to any preceding claim, further characterised in that the main conveyor (5) is the infeed of a parcel sorting machine.

## Patentansprüche

1. Förderband-Sortiersystem, mit
einem Haupt-Förderband (5),
einer Vielzahl von Zuführungs-Förderbändern (1—4), wobei jedes Zuführungs-Förderband eine Beladestation hat, an der ein Artikel auf das betreffende Zuführungs-Förderband, durch das er dem Haupt-Förderband (5) zuzuführen ist, geladen werden kann,
einem Steuermittel zum Steuern der Zuführungs-Förderbänder und zum Aufnehmen von Daten, die diesem eingegeben werden und die sich auf die Artikel beziehen, die auf die Zuführungs-Förderbänder geladen werden,
einem betreffenden ersten Erfassungsmittel (21) bei jedem Förderband (1—4) zum Erfassen der Artikel auf den Zuführungs-Förderbandern und Ausgeben von Daten an das Steuermittel in Reaktion auf eine derartige Erfassung, wobei das Steuermittel die Zuführungs-Förderbänder (1—4) in Reaktion auf diese Daten derart steuert, daß die Artikel auf den Zuführungs-Förderbändern dem Haupt-Förderband (5) mit einem vorbestimmten minimalen Zwischenraum zwischen aufeinanderfolgenden Artikeln zugeführt werden, und
einem zweiten Erfassungsmittel (22) bei dem Haupt-Förderband (5) zum Erfassen von Artikeln auf dem Haupt-Förderband und Ausgeben von Information an das Steuermittel in Reaktion auf eine derartige Erfassung, wobei das Steuermittel in Reaktion auf eine derartige Information prüft, ob jeder Artikel das zweite Erfassungsmittel (22) zu einer erwarteten Zeit erreicht hat, und dazu bestimmt ist, ein elektrisches Signal zu erzeugen, wobei die Beschaffenheit des Signals davon abhängt, ob jeder Artikel bei dem zweiten Erfassungsmittel (22) innerhalb einer vorbestimmten Spanne seiner erwarteten Zeit eingetroffen ist,
dadurch gekennzeichnet, daß das Steuermittel dazu bestimmt ist, Daten bezüglich der Längen der individuellen Artikel in Reaktion auf Infor-

**0 130 810**

mation zu speichern, die von den betreffenden ersten Erfassungsmitteln (21) zugeführt wird, um solche Daten mit der erfaßten Länge jedes Artikels, wie sie durch das zweite Erfassungsmittel (22) erfaßt ist, zu vergleichen, und ein elektrisches Signal zu erzeugen, wobei die Beschaffenheit des Signals davon abhängt, ob die erfaßte Länge jedes Artikels, wie sie durch das zweite Erfassungsmittel (22) erfaßt ist, innerhalb einer vorbestimmten Spanne seiner Länge, wie sie durch das erste Erfassungsmittel (21) bei dessen jeweiligem Zuführungs-Förderband erfaßt ist, liegt.

2. Förderband-Sortiersystem nach Anspruch 1, desweiteren dadurch gekennzeichnet, daß das Steuermittel dazu bestimmt ist, in Reaktion auf Information, die von dem zweiten Erfassungsmittel (22) zugeführt wird, zu prüfen, ob der gegebene minimale Zwischenraum aufrechterhalten worden ist oder nicht aufrechterhalten worden ist.

3. Förderband-Sortiersystem nach Anspruch 2, desweiteren dadurch gekennzeichnet, daß das Steuermittel dazu bestimmt ist, ein elektrisches Signal zu erzeugen, wobei die Beschauffenheit des Signals davon abhängt, ob der gegebene minimale Zwischenraum aufrechterhalten worden ist oder nicht aufrechterhalten worden ist.

4. Förderband-Sortiersystem nach Anspruch 1, desweiteren dadurch gekennzeichnet, daß das Steuermittel dazu bestimmt ist, Daten, die sich auf den Zwischenraum zwischen aufeinanderfolgenden Artikeln beziehen, in Reaktion auf Information zu speichern, die von dem ersten Erfassungsmittel (21) bei jedem der betreffenden Zuführungs-Förderbänder zugeführt wird, und solche Daten mit dem erfaßten Zwischenraum zwischen den Artikeln zu vergleichen, wie er durch das zweite Erfassungsmittel (22) erfaßt ist.

5. Förderband-Sortiersystem nach Anspruch 4, desweiteren dadurch gekennzeichnet, daß das Steuermittel dazu bestimmt ist, ein elektrisches Signal zu erzeugen, wobei die Beschaffenheit des Signals davon abhängt, ob der erfaßte Zwischenraum zwischen aufeinanderfolgenden Artikeln, wie er durch das zweite Erfassungsmittel (22) erfaßt ist, innerhalb einer vorbestimmten Spanne des Zwischenraums, wie er durch das Erfassungsmittel (21) bei den betreffenden Zuführungs-Förderbändern erfaßt ist, liegt.

6. Förderband-Sortiersystem nach einem der vorhergehenden Ansprüche, desweiteren dadurch gekennzeichnet, daß das Haupt-Förderband (5) das Beschickungsmittel einer Paket-Sortiermachine ist.

**Revendications**

1. Système de tri à transporteurs comprenant:
un transporteur principal (5);
plusieurs transporteurs d'alimentation (1—4), chaque transporteur d'alimentation comportant un poste de chargement dans lequel un article peut être chargé sur le transporteur respectif d'alimentation afin d'être avancé par celui-ci vers le transporteur principal (5);

des moyens de commande destinés à commander les transporteurs d'alimentation et à recevoir des données qui leur sont transmises et qui ont trait à des articles chargés sur les transporteurs d'alimentation;
des premiers moyens respectifs de détection (21) associés à chaque transporteur d'alimentation (1—4), destinés à détecter des articles sur les transporteurs d'alimentation et à fournir des données aux moyens de commande en réponse à cette détection, les moyens de commande commandant les transporteurs d'alimentation (1—4) en réponse auxdites données de manière que des articles présents sur les transporteurs d'alimentation soient avancés vers le transporteur principal (5) avec un écartement minimal prédéterminé entre des articles successifs; et
des seconds moyens de détection (22) associés au transporteur principal (5), destinés à détecter des articles sur le transporteur principal et à fournir une information aux moyens de commande en réponse à cette détection, les moyens de commande vérifiant, en réponse à cette information, si chaque article est arrivé aux seconds moyens de détection (22) au temps prévu, et étant conçus pour générer un signal électrique, la nature du signal dépendant de l'arrivée de chaque article aux seconds moyens de détection (22) dans une marge prédéterminée de son temps prévu,
caractérisé en ce que les moyens de commande sont conçus pour mémoriser des données concernant les longuers d'articles individuels en réponse à une information fournie par les premiers moyens respectifs de détection (21), pour comparer ces données à la longueur détectée de chaque article telle que détectée par les seconds moyens de détection (22), et pour générer un signal électrique, la nature du signal dépendant de la présence de la longueur détectée de chaque article, telle que détectée par les seconds moyens de détection (2), dans une marge prédéterminée de sa longueur telle que détectée par les premiers moyens de détection (21) à son transporteur respectif d'alimentation.

2. Système de tri à transporteurs selon la revendication 1, caractérisé en outre en ce que les moyens de commande sont conçus pour vérifier, en réponse à l'information fournie par les seconds moyens de détection (22), si ledit écartement minimal donné a été maintenu ou non.

3. Système de tri à transporteurs selon la revendication 2, caractérisé en outre en ce que les moyens de commande sont conçus pour générer un signal électrique, la nature du signal dépendant du maintien ou non dudit écartement minimal donné.

4. Système de tri à transporteurs selon la revendication 1, caractérisé en outre en ce que les moyens de commande sont conçus pour mémoriser des données ayant trait à l'écartement entre des articles successifs en réponse à une information fournie par les premiers moyens de détection (21) pour chacun des transporteurs respectifs d'alimentation, et pour comparer ces données à l'écartement détecté entre les articles, tels que détectés par les seconds moyens de détection (22).

5. Système de tri à transporteurs selon la revendication 4, caractérisé en outre en ce que les moyens de commande sont conçus pour générer un signal électrique, la nature du signal dépendant de la présence de l'écartement détecté entre des articles successifs tels que détectés par les seconds moyens de détection (22), dans une marge prédéterminée de l'écartement tel que détecté par les moyens de détection (21) aux transporteurs respectifs d'alimentation.

6. Système de tri à transporteurs selon l'une quelconque des revendications précédentes, caractérisé en outre en ce que la transporteur principal (5) est l'alimentation d'une machine de tri de colis.

FIG. 1.

FIG. 2

FIG. 4

FIG. 3

FIG. 5

FIG. 6

FIG. 7.

# FIG. 8.

```
┌─────────────────┐        ┌──────────────┐
│ START PARCEL    │        │ START LANE 1 │
│ LENGTH COUNTER  │        │              │
└─────────────────┘        └──────────────┘
```

IS SCANNER P.E. BEAM MADE ON LANE 1 — NO

YES

STORE LENGTH OF PARCEL

COUNT SPACING DISTANCE

REMOVE INHIBIT FROM OTHER LANES

START MAIN COUNTER AND DISTANCE TRAVELLED SO FAR

IS MAIN DISTANCE COUNT COMPLETE (WINDOW) — NO

YES

OPEN OBSERVATION WINDOW

IS RE-SYNC SCANNER P.E. BEAM BROKEN — NO

YES

PARCEL HAS CORRECT STATION PASS ON CODE

NOTE SLAT NUMBER START SETTING SLATS

IS OBSERVATION WINDOW CLOSED — NO

YES

CHANGE PARCEL CODE TO ZERO AND PASS ON

IS SYNC SCANNER P.E. BEAM MADE — NO

YES

HAS NEXT SLAT EDGE PULSE ARRIVED

YES

NOTE SLAT NUMBER AND STOP SETTING SLATS